Europäisches Patentamt

European Patent Office

Office européen des brevets

(11) Veröffentlichungsnummer: **0 007 494**
**A1**

## (12) EUROPÄISCHE PATENTANMELDUNG

(21) Anmeldenummer: 79102303.9

(22) Anmeldetag: 06.07.79

(51) Int. Cl.³: **G 11 B 15/60**
**G 11 B 15/29**

(30) Priorität: 12.07.78 DE 2830615

(43) Veröffentlichungstag der Anmeldung:
06.02.80 Patentblatt 80/3

(84) Benannte Vertragsstaaten:
AT BE CH DE FR GB NL SE

(71) Anmelder: BASF Aktiengesellschaft
Carl-Bosch-Strasse 38
D-6700 Ludwigshafen(DE)

(72) Erfinder: Schoettle, Klaus, Ing.
Ladenburger Strasse 70
D-6900 Heidelberg(DE)

(72) Erfinder: Hoffmann, Werner
Bannwasserstrasse 62
D-6700 Ludwigshafen(DE)

(72) Erfinder: Kaemmer, Eduard, Ing.
Südetenstrasse 10
D-6704 Mutterstadt(DE)

(54) **Führungseinrichtung für einen dünnen bandförmigen Aufzeichnungsträger, insbesondere für ein Magnetband.**

(57) Die Erfindung bezieht sich auf eine Bandführungseinrichtung, insbesondere für dünne Magnetbänder, die in Längsrichtungen starken Beschleunigungen unterworfen sind und eine Kontaktwickel-Bandtransportvorrichtung mit einer solchen Bandführungseinrichtung. Eine oder zwei drehbare, sonst jedoch stationär angeordnete Bandführungsrolle(n) ist (sind) mit teilweise um ihren Umfang vorgesehenen Flanschen mit Ein- und Auslaufanfasungen für das Band ausgebildet. Der Magnetkopf ist von der freien Bandlänge bei einer Führungsrolle zwischen Bandrolle und Führungsrolle und im Falle von zwei Führungsrollen zwischen diesen angeordnet. Es können auch Einrichtungen an der Führungsrolle zur Erzeugung eines Luftpolsters zur Stabilisierung der Drehung der Rolle ausgebildet sein.

FIG.3

EP 0 007 494 A1

BASF Aktiengesellschaft                    O. Z.   0050/033270

## Führungseinrichtung für einen dünnen bandförmigen Aufzeichnungsträger, insbesondere für ein Magnetband

Die Erfindung betrifft eine Führungseinrichtung für einen dünnen bandförmigen Aufzeichnungsträger, insbesondere ein Magnetband, das beim Transport relativ zu einem Magnetkopf in seiner Längsrichtung starken Beschleunigungen unterworfen wird, bei welcher wenigstens eine stationär angeordnete drehbare Führungsrolle zwischen zwei festen, bogenförmigen Führungsflanschen vorgesehen ist.

Mit der DT-AS 16 25 592 ist eine drehbare Führungsrolle für Magnetbänder bekannt. Das Bekanntsein stillstehender Anschlagflächen für die Längsränder der zu führenden Bänder ist darin ebenfalls erwähnt. Dabei handelt es sich jedoch in jedem Fall um schwenk- und drehbare Führungsrollen.

Aus der deutschen Patentschrift 12 49 340 ist ferner eine Führungseinrichtung bekannt, bei der die Fläche der zwischen zwei ortsfesten Lagerscheiben drehbaren Führungsrolle aus Gründen der Bandschwingungsvermeidung mit einer Samtauflage versehen ist. Außer der Lagerfunktion üben die Lagerscheiben keine Führungsfunktion für das Band aus. Ein Hochlaufen der Bänder an solchen Rollen ist unvermeidbar.

In der US-Patentschrift 33 17 104 ist eine drehbare Bandführungsrolle mit einem festen und einem federnden Flansch zur vertikalen Bandführung beschrieben.

Aus dem deutschen Gebrauchsmuster 75 35 256 ist eine stationäre Bandführungseinrichtung für mit hoher Transportgeschwindigkeit betriebene dünne Magnetbänder bekannt, wobei eine konkave Führungsfläche und ein eigenes, über Düsen erzeugtes Luftpolster zur Bandführung dienen.

Trotz dieses durch Fremdluftzufuhr erzeugten Luftpolsters kann nicht verhindert werden, daß insbesondere bei sehr dünnen und flexiblen Magnetbändern das Band mit Stellen der Führungsflächen in Berührung kommt.

Ein weiterer Nachteil besteht in der beträchtlichen Reibung zwischen Band und Führungsfläche sowie in dem aufwendigen Aufbau solcher Bandführungen.

Der Nachteil von ferner bekannten drehbaren Führungsrollen mit integrierten Flanschen ist darin zu sehen, daß bei dünnen Bändern das Band an den (mitdrehenden) Flanschen umklappt oder die Bänder an den Flanschen hochlaufen; somit ergeben sich bei allen bekannten Führungseinrichtungen als Nachteile Bandbeschädigungen und schlechte oder keine Höhenführungen.

Der vorliegenden Erfindung liegt die Aufgabe zugrunde, eine Führungseinrichtung mit niedriger Reibung, extrem guter Höhenführung und einfach und wirtschaftlich herzustellendem Aufbau zur Verfügung zu stellen. Insbesondere soll die Einrichtung bei portablen, baukleinen Videolaufwerken einsetzbar sein und keine Wartung erfordern.

Die Aufgabe wird mit einer Führungseinrichtung für einen dünnen bandförmigen Aufzeichnungsträger, insbesondere ein Magnetband, das beim Transport relativ zu einem Magnetkopf in seiner Längsrichtung starken Beschleunigungen unterworfen wird, gelöst, wenn wenigstens eine stationär angeordnete, frei drehbare Führungsrolle zwischen zwei festen bogenförmigen Führungsflanschen vorgesehen ist, die Führungsflansche um einen Teil des Umfangs der Führungsrolle angeordnet sind und am Beginn und Ende der Führungsflansche Einlauf- bzw. Auslaufanfasungen für das Band vorgesehen sind.

Dadurch wird neben einer präzisen Bandführung vorteilhaft erreicht, daß vom Band mitgerissene Luft zwischen Band und Führungsrolle entweichen kann und das Band gleichmäßig auf der Führungsfläche liegt, bis sich ein Luftpolster aufbaut und das Band in eine definierte Höhe hebt.

Ein weiteres Ausführungsbeispiel der erfindungsgemäßen Bandführung ist dadurch gegeben, daß die Führungsflansche oberhalb und unterhalb der Mittel-Drehebene der Führungsrolle und in mindestens einem Bogen von $\beta = 90^\circ - 2\alpha$ um den Umfang der Führungsrolle angeordnet sind, wobei $\alpha$ die Bogenlänge der Anfasungen ist.

Eine zweckmäßige Ausbildung ist auch gegeben, wenn die Führungsflansche in einem Bogen von $\beta = 180^\circ - 2\alpha$ um die Führungsrolle angeordnet sind.

In praktischer Ausbildung sind die Anfasungen in Draufsicht Ein- und Auslaufbereiche im Winkel $\alpha$ zwischen 5 und 30°, vorzugsweise 10° bis 15°.

In vorteilhafter Ausgestaltung der Führungseinrichtung gemäß der Erfindung, kann eine einzige Führungsrolle vorgesehen sein, so daß der Magnetkopf an der freien Bandlänge zwischen Bandantriebsrolle und Führungsrolle vorgesehen ist.

Um eine bessere Symmetrie in bezug auf den Magnetkopf zu erhalten, können erfindungsgemäß auch zwei Führungsrollen vorgesehen sein, die im Abstand voneinander angeordnet sind, wobei der Magnetkopf am Band zwischen den Führungsrollen vorgesehen ist.

Nach einem weiteren Erfindungsmerkmal können die Führungsflansche in Draufsicht kreisbogenförmig angeordnete Bohrungen aufweisen, die bei drehender Führungsrolle eine Pumpwirkung hervorrufen zur Stabilisierung der Drehung der Führungsrolle und zum Erzeugen eines Luftpolsters für das Band.

In weiterer zweckmäßiger Ausbildung der Führungseinrichtung können die Führungsflansche mit zur Führungsfläche der Führungsrolle konisch verlaufenden Führungsflä chen zur Zentrierung des Bandes in der Dreh-Mittelebene der Führungsrolle ausgebildet sein.

Es ist vorteilhaft auch möglich, die Führungsrolle ballig, d.h. mit zu ihrer Mittellinie gewölbter Führungsfläche auszubilden, um eine Zentrierwirkung zu erreichen und die Berührungsfläche zwischen Band und Rolle zu verkleinern.

Für eine Bandtransportvorrichtung nach dem Kontaktwickel-Prinzip ist die oben gekennzeichnete Führungseinrichtung besonders vorteilhaft einsetzbar. Die vorliegende Erfindung stellt daher auch eine Transportvorrichtung in folgender erfindungsgemäßer Ausbildung bereit:

Eine derartige Bandtransportvorrichtung nach dem Kontaktwickelprinzip mit Aufwickel- und Abwickel-Bandrollen, die auf relativ zu einer Bandantriebsrolle hin- und zurückbewegbaren Rollenträgern mittels Andruckeinrichtungen an die Bandantriebsrolle andrückbar sind, welche mit einem elastischen Umfangsrand ausgebildet ist, womit zwischen der Bandantriebsrolle und den Aufwickel- und Abwickel-Band- rollen Andruckkräfte und damit Antriebskräfte zum Drehantrieb der Bandrollen erzeugbar sind, und wobei das von der Abwickel-Bandrolle ablaufende Band über eine stationär angeordnete drehbare Führungsrolle und einen Magnetkopf zur Aufwickel-Bandrolle geführt und dort aufgewickelt wird, ist erfindungsgemäß gegeben, wenn die Führungsrolle eine zwischen zwei festen Führungsflanschen angeordnete frei drehbare Führungsrolle ist, und wenn die Führungsflansche um einen Teil des Umfangs der Führungsrolle angeordnet sind.

In weiterer praktischer Ausführung sind bei der Führungseinrichtung am Beginn und Ende der Führungsflansche Einlauf- und Auslaufanfasungen für das Band vorgesehen und die Führungsflansche in mindestens einem Bogen von $\beta = 90^{\circ}-2\alpha$, und vorzugsweise einem Bogen von $\beta = 180^{\circ}-2\alpha$, um den Umfang der Führungsrolle angeordnet sind, wobei $\alpha$ die Bogenlänge einer der Einlauf- und Auslaufanfasungen ist.

Weitere Einzelheiten zur Bandführungseinrichtung sind der folgenden Beschreibung und Zeichnung, anhand von darin beschriebenen bzw. dargestellten Ausführungsbeispielen entnehmbar.

In der Zeichnung zeigen:

Figur 1   eine Draufsicht auf ein schematisches Kontakt-
         wickel-Magnetbandlaufwerk mit der erfindungsge-
         mäßen Bandführungseinheit

Figur 2   eine Ausschnitt-Seitenansicht der Bandführungseinheit mit Antriebsrolle und Motor

Figur 2a einen Querschnittsteil der Bandführungseinheit nach Fig. 2 jedoch mit abgeschrägten Führungsflächen an den Festflanschen

Figur 3  eine Draufsicht auf einen der Führungsflansche mit Bohrungen

Figur 4  eine perspektivische Darstellung eines Führungsflansches nach Fig. 3, jedoch ohne Bohrungen

Figur 5  ein Blockschaltbild der Meßschaltung

Figur 6  ein Kurvendiagramm der Störfrequenzverteilung

Figur 7  eine Variante eines Magnetbandlaufwerks nach Fig. 1 mit zwei Bandführungsrollen.

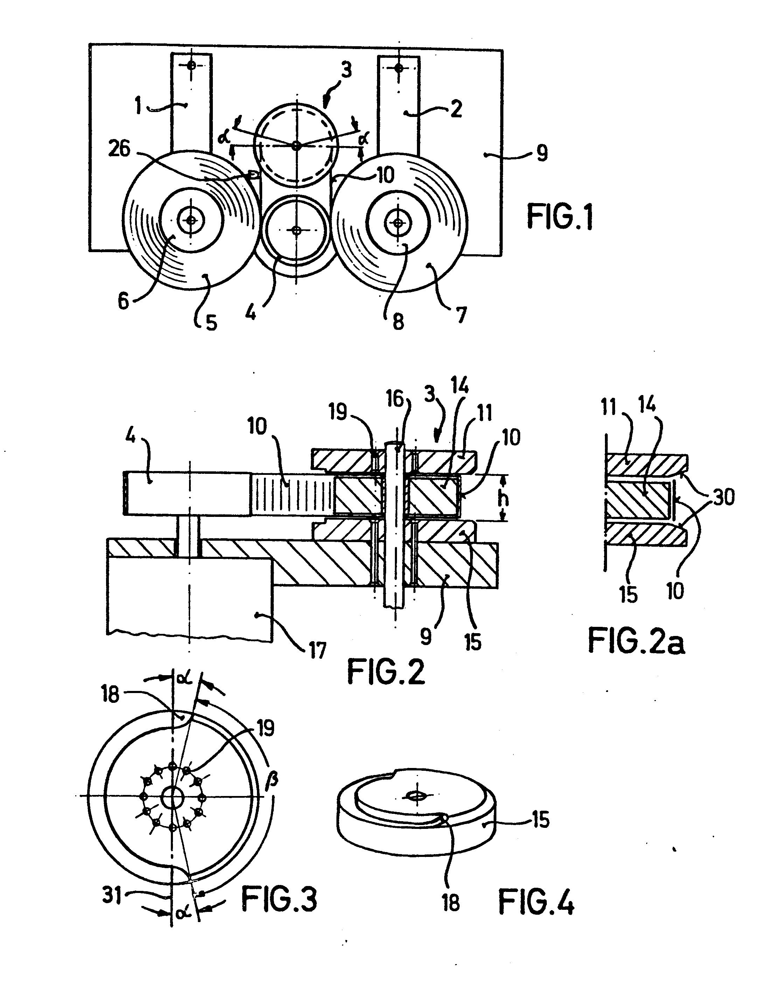

Figur 1 zeigt ein Kontaktwickel-Laufwerk mit beiden Schwenkarmen 1 bzw. 2, die erfindungsgemäße Bandführung 3 mit Antriebrolle oder Kapstan 4, eine Anordnung der Satelliten 6 bzw. 8, Bandrollen 5 bzw. 7, eine Grundplatte 9, auf der die Teile angeordnet sind. Das Band 10 ist z.B. mit einer Vielzahl von parallelen Magnetspuren versehen. Das Band 10 wird von der Rolle 7 an die Antriebsrolle 4 angedrückt, weiter über die Bandführungseinheit 3, die auf einer Achse angeordnet ist, und dann zum Wickel-Satellit 6, der ebenfalls an die Antriebsrolle 4 angedrückt ist und das Band 10 spult, bewegt. Das Umspulen wird mit hoher Transportgeschwindigkeit durchgeführt. Ein Magnetkopf 26 ist am freien Bandabschnitt zwischen Führungsrolle 3 und Antriebsrolle 4 bzw. Bandrolle 5 angeordnet.

Figur 2 zeigt eine Ausschnitt-Seitenansicht der Bandführungseinrichtung 3 mit der Antriebsrolle 4 und dem Antriebsmotor 17. Die Einrichtung 3 besteht im wesentlichen aus der drehbar auf der Achse 16 gelagerten Führungsrolle 14 und den symmetrisch zur Mittel-Drehebene der Führungsrolle 14 angeordneten stationären Führungsflanschen 11 und 15 (im folgenden auch Festflansche genannt). Wie in dieser Ansicht gezeigt, befindet sich zwischen der Führungsrolle 14 und den Festflanschen 11 und 15 ein Zwischenraum von vorzugsweise 0,05 - 0,3 mm. Dieser Zwischenraum kann z.B. durch nicht dargestellte Distanzscheiben hergestellt werden. Die Führungsrolle 14 weist zum störungsfreien Lauf ein geeignetes Lager, zweckmäßig ein Sintermetallager 13 auf. Das Material der Bandführungsrolle 14 ist normalerweise Metall. Im Falle, wenn zusätzliche Dämpfungsfunktionen für Bandschwingungen gefordert werden, soll zweckmäßig ein schweres Metall wie z.B. Messing oder z.B. ein Metallmantel mit Bleifüllung verwendet werden. Die Oberfläche der Führungsrolle 14 besitzt zweckmäßig ein Rauigkeitsmaß $R_Z$ von ca. 0,5 - 5 μm, vorzugsweise $R_Z$ = 2,5 μm (nach DIN 4768). Es ist auch vorteilhaft, die Führungsrolle leicht ballig auszuführen.

Figur 2a zeigt in einer Variante im Querschnitt schräg verlaufende Führungsflächen 30 an den Festflanschen 11 und 15, die damit eine Zentrierwirkung für das Band 10 erhalten.

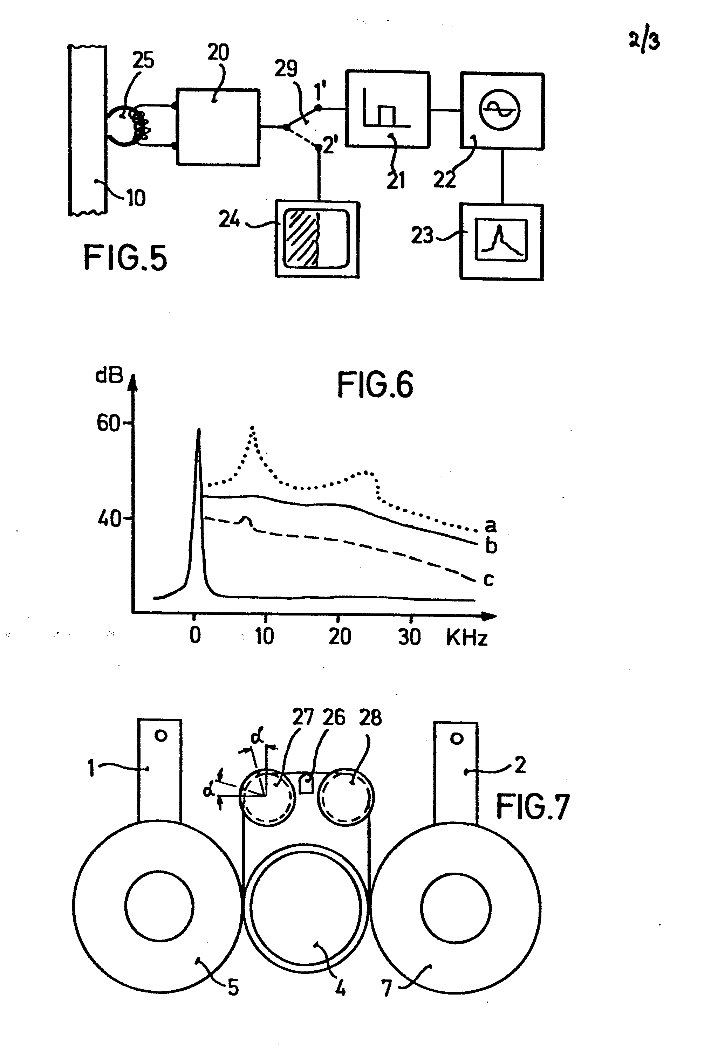

Wie in Figuren 3 und 4 dargestellt, ist der obere und der untere Festflansch (11 bzw. 15) jeweils im Einlauf- und Auslaufbereich des Magnetbandes mit einer Anfasung 18 versehen, die im Winkel α nach der Ein- bzw. vor der Auslauflinie des Magnetbandes 10 angebracht ist. Als Ein- und Auslauflinie wird hier die Mittelachse 31 bezeichnet, so daß in der Ein-Rollen-Ausführung in Figur 1 eine Bogenumschlingung B von 180°-2α erreicht wird. Der Winkel α wird vorzugsweise im Bereich von 5 bis 30°, vorzugsweise 10 bis 15°, gewählt. Im Beispiel der Figur 7 mit zwei zum Magnetkopf 26 symmetrisch angeordneten Führungsrollen 27 und 28 beträgt die Bandumschlingung ß jeweils 90° minus 2α, wobei α in derselben Größenordnung wie vorher erwähnt liegt.

Dadurch wird erreicht, daß eventuell mitgeschleppte Luft zwischen Magnetband 10 und Bandführungsrollen 14, 27 und 28 entweichen kann, das Magnetband gleichmäßig auf die Oberfläche der Bandführungsrolle aufgelegt und das Magnetband in einer stabilisierten Lage aus der, infolge Band-/Gerätetoleranzen mit der Bandführungshöhe zwischen den festen Führungsflanschen 11 und 15 meist nicht genau übereinstimmenden Bandlaufhöhe erst allmählich in die durch die Flansche 11 und 15 definierte Bandführungshöhe gezwungen wird. Die Höhe h beträgt die Bandbreite b plus bis maximal 0,3 mm, vorzugsweise plus 0,1 mm.

Weiterhin ist in Figur 3 eine Variante der Führungsflansche dargestellt. In dieser Ausführung sind mehrere Bohrungen 20 in den Führungsflansche in Kreisform in Draufsicht vorgesehen. Mit dieser Anordnung von mit Bohrungen 19 versehenen Festflanschen 11 und 15 entsteht beim Lauf der Führungsrolle 4 zwischen dieser und den Flächen der Festflansche 11 und 15 eine selbstansaugende Pumpwirkung. Diese Pumpwirkung erzielt durch Ausbildung von Luftpolstern eine Stabilisierung des Laufs der Führungsrollen 14, 27 und 28 und besitzt den zusätzlichen Vorteil der Verhinderung, daß das Magnetband in die zwischen der Führungsrolle 14, 27 und 28 und den Flächen der Festflansche 11 und 15 befindlichen Spalte eingezogen wird. Die Flächen der Festflansche 11 und 15 können zweckmäßig und aus Kostengründen genau gleich ausgebildet werden. Weiterhin ist es möglich, diese Flächen mit einer besonders verschleißfesten Oberfläche zu versehen, z.B. Aufdampfen, Aufsprühen, Aufgalvanisieren oder Plattieren von Hartmetall oder Keramikschichten. Auch eine Fertigung der Festflansche 11 und 15 ganz aus Keramik, Hartmetall oder Edelstein ist möglich.

BASF Aktiengesellschaft       -9-       O.Z.  0050/033270

Es wurden zwei prinzipiell vergleichbare Magnetlaufwerke nach dem Kontaktwickelprinzip in Messungen einander gegenübergestellt, wie folgt:

1. Laufwerk mit mondsichelförmiger, um einen Teil des Kapstans (Durchmesser 3 cm) angeordneter, stationärer Luft-Bandführung mit eingebautem Kopf. Breite der Führungsfläche 6,28 mm, mittlerer Abstand der Höhenführungsflansche 6,30 mm.

2. Laufwerk mit einer erfindungsgemäßen Bandführungseinrichtung gemäß Figuren 1 bis 4, der Kapstandurchmesser betrug 3,0 cm entsprechend dem Führungsrollendurchmesser. Die Höhe der Führungsrolle betrug dabei 6,10 mm bei einem Flanschabstand von 6,30 mm.

Beide Laufwerke besaßen keinerlei spezielle Einrichtungen zur Verhinderung oder Verringerung des Bandflutters noch Zeitbasiskorrektur-Einrichtungen irgendeiner Art.

Es wurde für alle Messungen dieselbe Meßschaltung der in Figur 5 dargestellten Art benutzt, darin bedeuten: Block 20 die Wiedergabeelektronik des Laufwerks, Block 21 einen Bandfilter mit der Bandbreite von 1 bis 30 KHz, Block 22 einen Oszillographen und Block 23 einen Spektralanalysator.

Der Bandfilter 21 dient als Sperrfilter gegen unerwünschte HF-Signalteile und ist nach dem Demodulator der Wiedergabeelektronik 20 angeschlossen.

Der Spektralanalysator 23 hat hier eine Meß-Bandbreite von 0,3 KHz.

Auf das Band wurde in Stellung (2) des Schalter 29 ein BAS-Signal, genauer ein Schwarz-Weiß-Sprung, aufgezeichnet und beim Test mittels des Wiedergabekopfes 25 und der Wiedergabeelektronik wieder abgetastet bzw. wiedergegeben. Auf einem Monitor 24 sind bei Schalterstellung (2) die gesamten Zeitfehlerstörungen als Periodendaueränderungen sichtbar.

Für Schalterstellung (1) wird eine feste Frequenz von fo = 3 MHz aufgezeichnet. Der Oszillograph 22 macht das demodulierte Signal sichtbar und damit die Periodendaueränderungen als Verschiebung der Nulldurchgänge des demodulierten Signals. Das mittels des Spektralanalysators 23 gezeigte Stör-Frequenzspektrum der Testlaufwerke ist in Figur 6 in Form von Kurven a bis c dargestellt. Der Spektralanalysator macht allgemein die, z.B. durch Bandflutter, hervorgerufenen Signalstörungen nach Frequenz und Amplitude sichtbar. In Figur 6 gehört die punktierte Kurve a zum Laufwerk 1 und die ausgezogenen Kurve b zum Laufwerk 2 nach der Erfindung. Die dritte gestrichelte Kurve c zeigt den Verlauf des Demodulatorrauschens. Während der Impuls bei null Hertz das Nullsignal des Analysators ist, fällt auf, daß die Kurven a - c bei derselben Frequenz bei ca. 7 KHz eine Störfrequenz aufweisen.

Der prozentuale Bandflutter-Störsignal-Faktor $S_F$ ist mit der Gleichung

$$S_F [\%] = \frac{f_1}{f_o} \cdot 100 = \frac{USF}{f_o \cdot U_{maxdemo}} \cdot \Delta f \cdot 100$$

gegeben. Darin bedeuten fo die Frequenz 3 MHz (die Frequenz der Spitzen der Horizontalzeilenimpulse.), $f_1$ die jeweilige Störfrequenz, USF der Spannungswert bei der ermittelten Flutterfrequenz.

$U_{maxdemo}$ die maximale Ausgangsgleichspannung des Demodulators (hier 2 Volt) f der gesamte Frequenzhub (hier 1,3 KHz).

In folgender Tabelle sind die Vergleichswerte der getesteten Laufwerke zusammengestellt:

| Laufwerk | $U_{SF(mV)}$ | $S_F$ (%) | $\triangle \dot{t}$ (usec) | $\triangle f$ (%) |
|----------|----------|----------|----------|----------|
| 1 | 18 | 0,39 | 0,8 | 1,25 |
| 2 | 4 | 0,09 | 0,2 | 0,3 |

In den Spalten $\triangle t$ ist der sichtbare hochfrequente Zeitbasisfehler eingetragen, der am Oszillograph abgelesen wurde. In der Prozenzspalte ist der auf eine Zeilenlänge von 64 u sec als 100 % bezogene prozentuale Fehler aufgeführt. Die Sichtbarkeitsgrenze für den Zeitbasisfehler auf dem Bildschirm des Oszillographen $< 2$ liegt bei 0,2 % entsprechend 1,28 usec, so daß obiger Wert von 0,3 % noch einwandfrei ablesbar war.

Im Ergebnis ist festzustellen, daß der prozentuale Flutter-Störsignal-Faktor von rund 0,4 % auf 0,09 %, also auf den 4,5ten Teil reduziert werden konnte. Eine deutliche Verringerung des Störsignalfaktors $S_F$ auf ein Drittel wurde sogar mit einem Laufwerk vom Typ 1, das mit einer aufwendigen elektronischen Zeitbasiskorrektureinrichtung auf Basis einer CCD, Charged Coupled Device) ausgerüstet war, erreicht.

Gemäß Figur 6 ergibt sich eine Verringerung der Störsignalamplituden zwischen 10 und 20 dB, entsprechend Faktoren zwischen 3,3 und 10.

0007494

BASF Aktiengesellschaft          -1-          O.Z.  0050/033270

<u>Patentansprüche</u>

1.  Führungseinrichtung für einen dünnen bandförmigen Aufzeichnungsträger, insbesondere ein Magnetband, das
    beim Transport relativ zu einem Magnetkopf in seiner
    Längsrichtung starken Beschleunigungen unterworfen wird, bei welcher wenigstens eine stationär angeordnete, frei drehbare Führungsrolle zwischen zwei
    festen bogenförmigen Führungsflanschen vorgesehen
    ist, <u>dadurch gekennzeichnet</u>, daß die Führungsflansche
    (11, 15) um einen Teil des Umfangs der Führungsrolle(n)
    (3, 14, 27, 28) angeordnet sind und am Beginn und Ende
    der Führungsflansche (11, 15) Einlauf- bzw. Auslaufanfasungen (18) für das Band vorgesehen sind.

2.  Einrichtung nach Anspruch 1, <u>dadurch gekennzeichnet</u>,
    daß die Führungsflansche oberhalb und unterhalb der
    Mittel-Drehebene der Führungsrolle und in mindestens
    einem Bogen von ß = 90°-2$\alpha$ um den Umfang der Führungs-
    rolle angeordnet sind, wobei $\alpha$ die Bogenlänge einer der
    Anfasungen ist.

3.  Einrichtung nach Anspruch 2, <u>dadurch gekennzeichnet</u>,
    daß die Führungsflansche in einem Bogen von ß = 180°-2$\alpha$
    um die Führungsrolle angeordnet sind.

4.  Einrichtung nach einem oder mehreren der Ansprüche 1
    bis 3, <u>dadurch gekennzeichnet</u>, daß die Anfasungen (18)
    in Draufsicht (Fig. 3) Ein- und Auslaufbereiche (18) im
    Winkel ($\alpha$) zwischen 5 und 30°, vorzugsweise 10 - 15°
    bilden.

5. Einrichtung nach Ansprüchen 1 bis 4, dadurch gekennzeichnet, daß eine einzige Führungsrolle (3, 14) vorgesehen ist, und daß der Magnetkopf (26) an der freien Bandlänge zwischen Bandantriebsrolle (4) und Führungsrolle (3) vorgesehen ist.

6. Einrichtung nach Ansprüchen 1 bis 4, dadurch gekennzeichnet, daß zwei Führungsrollen (27, 28) vorgesehen sind, die im Abstand voneinander angeordnet sind, wobei der Magnetkopf (26) am Band zwischen den Führungsrollen (27, 28) vorgesehen ist.

7. Einrichtung nach einem oder mehreren der Ansprüche 1 in 6, dadurch gekennzeichnet, daß die Führungsflansche (11, 15) in Draufsicht kreisbogenförmig angeordnete Bohrungen (19) aufweisen, die bei drehender Führungsrolle eine Pumpwirkung hervorrufen zur Stabilisierung der Drehung der Führungsrolle (3) und zum Erzeugen eines Luftpolsters für das Band (10).

8. Einrichtung nach einem der Ansprüche 1 bis 7, dadurch gekennzeichnet, daß die Führungsflansche (11, 15) mit zur Führungsfläche der Führungsrolle (14) konisch verlaufenden Führungsflächen (30) zur Zentrierung des Bandes (10) in der Dreh-Mittelebene der Führungsrolle (14) ausgebildet sind.

9. Einrichtung nach einem oder mehreren der Ansprüche 1 bis 8, dadurch gekennzeichnet, daß die Führungsrolle(n) (3, 27, 28) ballig ausgebildet ist (sind) und der Magnetkopf (26) an der freien Bandlänge zwischen Bandantriebsrolle (4) und Führungsrolle (3) vorgesehen ist.

10. Bandtransportvorrichtung nach dem Kontaktwickelprinzip mit Aufwickel- und Abwickel-Bandrollen, die auf relativ zu einer Bandantriebsrolle hin- und zurückbewegbaren Rollenträgern mittels Andruckeinrichtungen an die Bandantriebsrolle andrückbar sind, welche mit einem elastischen Umfangsrand ausgebildet ist, womit zwischen der Bandantriebsrolle und den Aufwickel- und Abwickel-Bandrollen Andruckkräfte und damit Antriebskräfte zum Drehantrieb der Band-Rollen erzeugbar sind, und wobei das von der Abwickel-Bandrolle ablaufende Band über eine stationär angeordnete, drehbare Führungsrolle und einen Magnetkopf zur Aufwickel-Bandrolle geführt und dort aufgewickelt wird, dadurch gekennzeichnet, daß die Führungsrolle (3, 27, 28) eine zwischen zwei festen Führungsflanschen (11, 15) angeordnete, frei drehbare Führungsrolle (14) ist, und die Führungsflansche (11, 15) um einen Teil des Umfangs der Führungsrolle (14) angeordnet sind.

11. Bandtransportvorrichtung nach Anspruch 10, dadurch gekennzeichnet, daß am Beginn und Ende der Führungsflansche (11, 15) Einlauf- und Auslaufanfasungen (18) für das Band (10) vorgesehen sind und die Führungsflansche (11, 15) in mindestens einem Bogen von $ß = 90° - 2\alpha$, vorzugsweise einem Bogen von $ß = 180° - 2\alpha$ um den Umfang der Führungsrolle (14) angeordnet sind, wobei $\alpha$ die Bogenlänge von einer der Einlauf- und Auslaufanfasungen (18) ist.

Zeichn.

FIG.1

FIG.2

FIG.2a

FIG.3

FIG.4

FIG.5

FIG.6

dB

60

40

0    10    20    30    KHz

a
b
c

27  26  28

FIG.7

1    2

d

5    4    7

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>US - A - 3 831 831</u> (FLIPPEN)<br>* Spalte 3, Zeile 49 - Spalte 4, Zeile 27; Figuren * | 1,6 |
| | -- | |
| | <u>DE - C - 705 813</u> (KLANGFILM)<br>* Seite 2, Zeilen 4-27; Figuren * | 1 |
| | -- | |
| | <u>US - A - 2 742 283</u> (RIVAS)<br>* Spalte 2, Zeilen 16-71; Figuren * | 1 |
| | -- | |
| | <u>US - A - 3 443 273</u> (ARCH)<br>* Spalte 2, Zeile 32 - Spalte 3, Zeile 32; Figuren * | 1 |
| | -- | |
| | <u>US - A - 3 768 717</u> (SALCEDO)<br>* Spalte 2, Zeile 26 - Spalte 4, Zeile 40; Figuren * | 1,8 |
| | -- | |
| D | <u>US - A - 3 507 437</u> (LIPS)<br>* Spalte 2, Zeile 26 - Spalte 3, Zeile 2; Figuren *<br>& DE - B - 1 625 592 | 1,6,8 |
| | -- | |
| | <u>FR - A - 1 197 820</u> (E.M.I.)<br>* Seite 2, Spalte 1; Figur 2 * | 7 |
| | --  ./ | |

KLASSIFIKATION DER ANMELDUNG (Int.Cl. 3)

G 11 B 15/60
15/29

RECHERCHIERTE SACHGEBIETE (Int. Cl. 3)

G 11 B 15

KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 17-10-1979 | DECLAT |

EPA form 1503.1  06.78

Europäisches
Patentamt

**EUROPÄISCHER RECHERCHENBERICHT**

| | EINSCHLÄGIGE DOKUMENTE | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | US - A - 3 393 849 (HASS) <br><br> * Spalte 2, Zeilen 12-47; Figuren * <br><br> -- <br><br> FR - A - 2 203 133 (AMERICAN VIDEONETICS) <br><br> * Seite 5, Zeilen 28-31; Figuren 1,3 * <br><br> -- <br><br> US - A - 3 593 945 (RICHARDSON) <br><br> * Spalte 2, Zeile 68 - Spalte 3, Zeile 32; Figur 1 * <br><br> ---- | 1,9 <br><br><br><br><br> 6,10 <br><br><br><br><br><br> 5,10 | |
| | | | RECHERCHIERTE SACHGEBIETE (Int. Cl. 3) |

EPA Form 1503.2 06.78